# EUROPEAN PATENT APPLICATION

(11) **EP 4 407 817 A1**
(43) Date of publication of application: **31.07.2024**
(21) Application number: 21958286.3
(22) Date of filing: 22.09.2021
(51) Int. Cl.: H01S 3/067, H01S 3/16, H01S 3/0941

(54) **PUMPING SYSTEM FOR HIGH-POWER HOLMIUM-DOPED OPTIC FIBRE LASER**

(71) Applicant: Universitat de València, 46010 Valencia (ES); Centro de Investigaciones en Óptica, AC, León, Guanajuato 37150 (MX)
(72) Inventor: BARMENKOV, Yury, Guanajuato, 37150 (MX); KIRIYANOV, Alexander, Guanajuato, 37150 (MX); ANDRÉS BOU, Miguel Vicente, 46010 VALENCIA (ES); CRUZ MUÑOZ, José Luis, 46010 VALENCIA (ES); DÍEZ CREMADES, Antonio, 46010 VALENCIA (ES); SILVESTRE MORA, Enrique, 46010 VALENCIA (ES)
(74) Representative: Ponti & Partners, S.L.P
(86) International application number: PCT/ES2021/070687
(87) International publication number: WO 2023/047000

(57) **Abstract**

A pump system for a high-power holmium-doped fiber optic laser is provided, comprising: a 1.13 micron pumping means composed of: a coreless fiber and a light absorber; high and low reflection Bragg gratings at 1.135 microns, which form a ytterbium fiber laser cavity; high-power 915 nm laser diodes pumping the ytterbium fiber; and a high reflection Bragg grating (HR-FBG) at 2.07 microns; and a 2 micron laser formed by a holmium-doped fiber (HDF) that forms, with the high reflection Bragg grating at 2.07 microns, a holmium-doped fiber laser cavity, where each 915 nm photon of the 915 nm laser diodes that is converted into a 1.13 micron photon releases additional energy in the form of heat.

## Description

### Field of the invention

The present invention is directed to the technical field of processing transparent plastic materials in the visible, biomedicine, active vision systems, defense and pollution monitoring. Particularly, the present invention relates to a pumping system for a high power holmium-doped fiber optic laser in which the heating of the fiber with which the laser is pumped is simplified or eliminated and the insulation and/or cooling needs of the rest of the equipment are reduced or eliminated.

### BACKGROUND OF THE INVENTION

As is well known in the art, 2 micron lasers constructed with fiber optic technology employ either thulium-doped or holmium-doped fiber. In the case of using holmium-doped fiber, it can be pumped with a 1.13 micron auxiliary laser built with ytterbium, which is an advantage over the use of thulium-doped fiber. This 1.13 micron ytterbium laser constitutes the pump, and its correct operation at powers of tens of watts requires heating the fiber to avoid parasitic laser emission at shorter wavelengths, other than the desired one of 1.13 micron. The ytterbium laser is normally fed with 975 nm pumping diodes. Heating the ytterbium fiber to temperatures up to 80°C is a major technical complication. In this sense, the heating of the ytterbium fiber involves incorporating power electronics into the equipment to heat the metal support in which the ytterbium fiber is wound up to temperatures of 80 °C (it can be a 20 cm diameter aluminum cylinder). This source of heat inside the laser equipment harms other parts of the electronics and optics of the system and increases the insulation and/or cooling needs of the rest of the equipment with respect to the hot coil. Commonly in the state of the art, the problem is solved by heating and could also be solved by multiplying the number of pumps so that each one works below the threshold of the parasitic laser emission, however, this is not enough.

However, as is known in the state of the art, in order to have a 2 micron laser in fiber optic technology, the most common solution is to use fiber doped with thulium. The pumping of this fiber is always complicated and a common solution is to use a cascade laser scheme: 975 nm semiconductor laser diodes, 1.6 micron erbium-doped fiber laser. However, if holmium-doped fiber is used, longer wavelengths can be achieved than with thulium-doped fiber, exceeding 2 microns, and the pumping scheme is simplified by reducing it to pumping diodes and a ytterbium laser, which is advantageous over that of erbium.

The use of fiber doped with holmium has the characteristic of being able to obtain laser emission at wavelengths above 2 microns. Precisely the interest is this band of wavelengths greater than 2 microns, which motivates recent proposals to pump the holmium fiber with a thulium laser, which is very complex due to the very complexity of the thulium laser, but it is the way of being able to have the emission at long wavelengths above 2 microns that holmium provides.

As an option, the possibility of replacing the thulium pumping with a 1.15 micron pumping has been attempted; however, the 1.15 micron pumping is relatively complicated because it employs a relatively conventional ytterbium laser at 1090 nm that feeds a Raman laser that emits at 1.15 microns.

The background proposing the use of a simple ytterbium laser to pump the holmium-doped fiber originates from two research groups. On the one hand, those investigations in which the ytterbium-doped fiber is excited with 975 nm semiconductor laser diodes, for the assembly of 2 micron lasers of relatively low power. There are also those in which 910 nm semiconductor diodes are used. However, in these documents the choice of these semiconductor diodes is not justified beyond being the diodes that they have available, without justification or any relationship in relation to the heating of the fiber that is the reason for the present invention that is intended to be protected. Likewise, in these documents the fiber used is GTWave type (twin), with non-commercial chemical composition and manufacturing process, which is a specific fiber of this research group, and different from commercial or conventional double cladding fibers.

On the other hand, there are documents in which the pumping of ytterbium with 975 nm semiconductor diodes is proposed, where some alternatives are proposed to the use of ytterbium-doped fiber, either the use of a 1.15 micron semiconductor diode and low power, or an unusual pumping of 790 nm and holmium-thulium co-doped fiber.

In the present invention, 1.13 micron pumping is proposed, either using semiconductor diodes of that wavelength or a ytterbium laser pumped with 915 nm semiconductor diodes.

Ytterbium lasers of 1.15 microns have been developed over the years not only for use as a pump for fibers doped with holmium, but also for the possibility of being used by frequency doubling as a source of yellow laser light. In this regard, there are documents that focus on the development of ytterbium lasers at wavelengths greater than 1.1 microns (for example the 1.13 microns of our case), but do not address the pumping of fiber doped with holmium. In this group of works, twin type fiber is used and the improvements achievable by heating the fiber to temperatures of the order of 100 °C are studied, as well as the use of Al₂O₃ as a co-dopant. The reference [Jacquemet 2009] uses double-cladding fiber, similar to the one we use, clearly identifies the problem of parasitic lasing from a certain pumping threshold and the improvement obtained by heating the fiber (this is the case up to 80°C), as well as by using Al₂O₃ as a co-dopant in the manufacture of ytterbium-doped fiber.

Finally, we must point out the documents in which parasitic lasing is identified as a major problem, not only for consuming energy and reducing the final efficiency, but for the catastrophic damage it can cause to the fiber and fiber optic components of the laser system. The origin of parasitic lasing is linked to the appearance of Stimulated Brillouin Scattering (SBS), a subject that the inventors of the present have investigated in detail.

On the other hand, there are also the following documents in which ytterbium-doped fiber of the twin type is used: *Yellow Frequency-Doubled Self-Heated Yb Fiber Laser,* which refers to the development of a yellow laser by frequency doubling of a 1160 nm Yb laser, different from the present invention which is to pump a Holmium fiber to have a 2 micron laser, in said document the problem is identified and solved by insulating the fiber with foam rubber so that it retains maximum heat and raises its temperature, thus reducing the impact of parasitic emission. That technique produces a limited effect and does not solve the problem optimally as the present invention.

*Clad-Pumped YDFLs Operating in the 1150-1200 nm Range,* which refers to the development of a yellow laser by frequency doubling of a Yb laser of 1147 nm, or 1160 nm or 1180 nm, different from the invention which is to pump a Holmium fiber to have a 2 micron laser, likewise, in said document the problem is identified and solved by insulating the fiber with foam rubber so that it retains maximum heat and raises its temperature, thus reducing the impact of parasitic emission. It is also mentioned that active fiber heating could be implemented. These techniques produce a limited effect and do not solve the problem optimally like the present invention.

*YDFL Operating in 1150 1200-nm Spectral Domain,* which refers to the possible application for the pumping of fibers doped with Ho. The document studies a Yb laser in the range 1150-1200 nm, higher than the wavelength proposed in the present invention of 1134 nm. As in the previous documents, the problem is identified and solved by insulating the fiber with foam rubber so that it retains maximum heat and raises its temperature, thus reducing the impact of the parasitic emission, which produces a limited effect and does not solve the problem as well as in the invention. This document indicates that the use of 975 nm is advantageous with respect to the use of 915 nm, just the opposite of what is proposed by the invention, and that the fundamental improvement is achieved by actively heating the fiber or using foam rubber to insulate the fiber. They also insist that the relevant thing would be to increase the diameter of the doped fiber core and combine it with fiber heating.

Therefore, there is no high power holmium-doped fiber optic laser pumping system in the state of the art in which the heating of the fiber with which the laser is pumped is simplified or eliminated and where the insulation and/or cooling needs of the rest of the equipment are reduced or eliminated, maintaining the threshold of parasitic lasing and the appearance of "Stimulated Brillouin Scattering" above the pumping level used.

### OBJECT OF THE INVENTION

It is therefore an object of the present invention to provide a pumping system for a high power holmium-doped fiber optic laser in which the heating of the fiber with which the laser is pumped is simplified or eliminated, or substantially reduced.

It is another object of the invention to provide a pumping system for a high power holmium-doped fiber optic laser in which the power and control electronics of the laser are simplified.

It is a further object of the present invention to provide a pumping system for a high power holmium-doped fiber optic laser in which the need for insulation and cooling of the rest of the system from the fiber that would require heating is simplified.

It is yet another object of the present invention to provide a pumping system for a high power holmium-doped fiber optic laser which reduces the number of components in manufacturing and the consequent economic improvements.

It is still a further object of the invention to provide a pumping system for a high power holmium-doped fiber optic laser which provides 1.13 micron pumping fed with 915 nm semiconductor laser diodes in a 2 micron laser.

In general, for all the objects indicated above, the pumping system is for high power lasers, but it also works and, therefore, can be used for medium and low powers.

### BRIEF DESCRIPTION OF THE INVENTION

These and other objects are achieved by a pumping system for a high power holmium-doped fiber optic laser, which is made up of a 1.13 micron pumping means composed of: a coreless fiber and a light absorber configured to eliminate the reflection of light at the wavelength of the double-cladding ytterbium fiber laser (DC-YDF); high reflection (100%, HR-FBG) and low reflection (20% or 40%, LR-FBG) Bragg gratings at 1.135 microns, which form a ytterbium fiber laser cavity; high-power 915 nm semiconductor laser diodes that pump ytterbium fiber through a pump coupler; and a high-reflection Bragg grating (HR-FBG) at 2.07 microns; and a 2 micron laser formed of a holmium-doped fiber optic (HDF), wherein the holmium-doped fiber optic and the high-reflection Bragg grating at 2.07 microns form a cavity of the holmium-doped fiber laser defining the final emitting stage of 2 microns; wherein the 915 nm photons of said 915 nm semiconductor laser diodes are highly energetic so that each 915 nm photon that becomes a 1.13 micron photon releases additional energy in the form of heat, wherein said additional energy is released directly in the core of the double-cladding ytterbium-doped fiber (DC-YDF) and produces a heating thereof in the core of the fiber itself, simplifying the heating of the double-cladding ytterbium fiber (DC-YDF) in high powers or eliminating it for medium-low powers.

Unlike the systems of the state of the art, where the heating means are external to the ytterbium-doped optical fiber, as can be seen, in the pumping system proposed by the present invention, in a characteristic manner, the auxiliary pumping device replaces said heating means by means of an auxiliary pumping device configured and arranged to emit the pumping light with sufficient energy to excite the ytterbium-doped optical fiber so that the latter amplifies light by emission of stimulated radiation and also to internally heat the core of the ytterbium-doped optical fiber to at least 50% of the temperature necessary to avoid said parasitic laser emissions.

Additional features and advantages of the invention should be more clearly understood by the detailed description of the preferred embodiment thereof, given by way of a non-limiting example with reference to the attached drawings, wherein:

### BRIEF DESCRIPTION OF THE DRAWINGS

Figure 1 is a schematic view of the pumping system for a high power holmium-doped fiber optic laser of the present invention.
Figure 2 is a schematic view of a prior art pumping system previous to the present invention..
Figure 3 shows a graph representing the threshold of parasitic emission as a function of temperature for the case of using laser diodes of 975 nm and 915 nm, with two values of the reflectivity of LR-FBG in the latter case.
Figure 4 shows a graph representing the power emitted at 2 microns at the output of the complete laser system, as a function of the optical power supplied by the 976 nm and 915 nm laser diodes, with two values of the reflectivity of LR-FBG in the latter case.

### Detailed description of the invention

The present invention relates to a 2 micron laser constructed with fiber optic technology employing holmium-doped fiber, wherein the pumping is performed with a 1.13 micron auxiliary laser constructed with ytterbium, which is an advantage over the use of thulium-doped fiber. This 1.13 micron ytterbium laser at high powers requires heating the fiber to avoid parasitic laser emission at shorter wavelengths, other than the desired 1.13 micron. Therefore, to this end, the present invention feeds the ytterbium laser with 915 nm diodes, which reduces or even eliminates the heating needs of the ytterbium fiber. This improved pumping constitutes an advantageous simplification from the point of view of the industrialization of the laser since it does not require incorporating a heating element to keep the doped fiber at a relatively high temperature and replace it with a low temperature heating system or even be able to eliminate it completely. The solution to the technical problem lies in the internal heating, in the core of the ytterbium-doped fiber itself, provided by the 915 nm photons that are more energetic than those of 975 nm, and that release more heat for each 1.13 micron photon generated.

The use of 915 nm diodes to feed the ytterbium-doped fiber deposits additional heat - with respect to the case of using a conventional 975 nm pump - directly into the core of the doped fiber, heating it from within and thereby eliminating the need for the heating system described for medium-low powers. For high powers it is possible that a small heating of less than 40 ° C is still required, which is much easier from an electronic point of view and easier to compatibilize with the rest of the electronic and optical systems of a 2 micron laser.

Therefore, the object of the invention is to have a high-power 2 micron laser, which employs a holmium-doped fiber, in which it is possible to conceive a relatively simple pumping system, compared to the case of employing thulium-doped fiber. The main problem is that this ytterbium laser naturally tends to emit at shorter wavelengths, so even if the laser cavity is constructed for the wavelength of 1.13 microns, as the excitation power of the ytterbium-doped fiber increases, there comes a time when the threshold of the parasitic emission is reached at a wavelength of less than 1.13 microns, said parasitic emission consumes energy, destabilizes the 1.13 micron emission and reduces the power emitted at 1.13 microns, which limits the power emitted at 2 microns which is the final target. Additionally, we must point out that the parasitic emission can damage the fiber and optical fiber components in a catastrophic way.

Accordingly, a 1.13 micron ytterbium laser was designed that is fed by 915 nm semiconductor laser diodes, wherein as already mentioned they generate additional heat in the same core of the ytterbium fiber and eliminate the need to employ external heating or reduce it significantly.

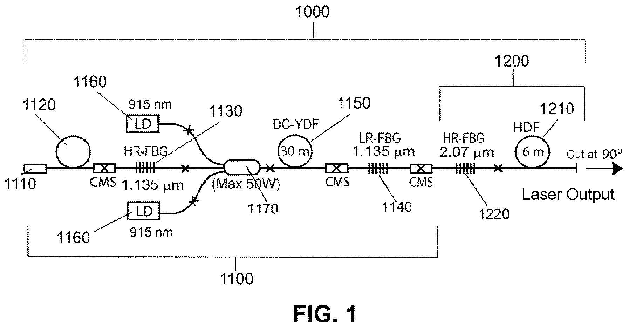

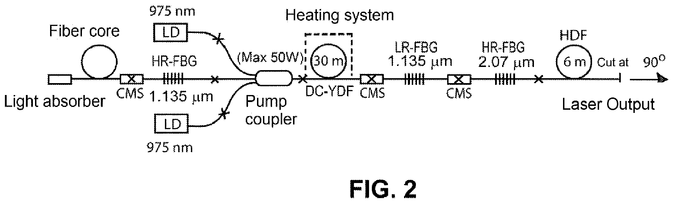

Referring to Figures 1 and 2 there is shown the high power holmium-doped optical fiber laser system of the present invention numbered generally with numeral 1000. Said laser system 1000 is made up of: a pumping system for a high power optical fiber laser 1100 and a 2 micron laser formed by a holmium-doped optical fiber (HDF) 1200. Such a pumping system 1100 comprises a 1.13 micron pumping means composed of: a coreless fiber 1120 and a light absorber 1110; high-reflection (100%, HR-FBG) 1130 and low-reflection (20% or 40%, LR-FBG) 1140 Bragg gratings at 1.13 micron; a ytterbium-doped coaxial double-cladding fiber (DC-YDF) 1150; high-power 915 nm semiconductor laser diodes 1160; and a pump coupler 1170.

The operation of the pumping system for a high power holmium-doped fiber optic laser 1000 of the present invention is as follows:
Figure 1 shows the ytterbium-doped double-cladding fiber (DC-YDF) 1150 which is the key element of the 1.13 micron pump that feeds the holmium-doped fiber 1210 that defines the final emitting stage of 2 microns 1200. Said fiber 1150 is pumped with 915 nm semiconductor diodes by means of the pump combiner 1170. High reflection (HR-FBG) 1130 and low reflection (LR-FBG) 1140 Bragg gratings at 1.135 micron form a ytterbium fiber laser cavity while high reflection (HR-FBG) Bragg grating 1220 at 2.07 micron and the cut at 90° of the holmium-doped fiber (HDF) 1210 form a holmium-doped fiber laser cavity. The coreless fiber 1120 located on the left side of the HR-FBG grating 1130 and the light absorber serve to eliminate reflection of light at the wavelength of the ytterbium fiber laser. The 915 nm semiconductor diodes emit 915 nm photons that are more energetic than the conventionally used 975 nm ones, so every 915 nm photon that is converted to a 1.13 micron photon releases an additional energy in the form of heat, compared to the 975 nm photons, this additional energy provided by said 915 nm photons is released directly in the core of the ytterbium-doped fiber and produces a heating of the same in the core of the fiber in a much more efficient way than when the fiber is to be heated from the outside with an electronically controlled heating system.

In this sense, the 915 nm pumping is chosen for the internal heating provided by the 915 nm photons when re-emitted as 1.13 micron photons.

Figure 2 is the schematic of a 2 micron laser without the improvement of the invention, wherein two 975 nm semiconductor laser diodes (LD) feed the double-cladding ytterbium fiber (DC-YDF) and each one is 30 W. The DC-YDF fiber is wound in an aluminum cylinder that can be heated to adjust the temperature of the fiber by means of a heating system.

In contrast, in the present invention, the incorporation of a pumping system using 915 nm laser diodes eliminates the need for the heating system or significantly reduces it. Likewise, when 915 nm laser diodes are used without making any other change, the 50 W level is reached with only 35 °C, and with 38 °C 58 W can be exceeded before parasitic emission occurs. In this case, in addition, the use of 915 nm diodes allows working at room temperature if the required power of the semiconductor diodes is less than 30 W.

Likewise, the 1.13 micron laser cavity can be optimised to increase the heating of the fiber and further raise the threshold of parasitic lasing. To do this, the reflectivity of the LR-FBG Bragg grating 1140 has been increased, which was initially 20%, up to 40%. The LR-FBG grating 1140 acts as the output mirror of the 1.13 micron ytterbium laser and its conventional design focuses on maximizing the output power of the laser, which leads to employing low reflectivity (20% in the present invention).

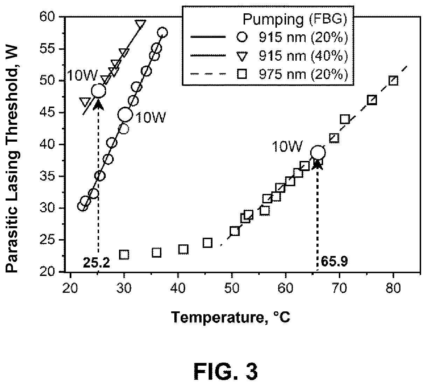

Figure 3 shows the increase in the threshold power of the parasitic lasing as a function of temperature. In the specific case of our prototype, if 975 nm laser diodes are used, we have to heat the fiber to 80 °C to raise the threshold above 50 W. However, when we use 915 nm laser diodes (without making any other changes) the 50 W level is reached with only 35 °C, and with 38 °C, 58 W can be exceeded. In this case, the use of 915 nm diodes allows working at room temperature if the required power of the semiconductor diodes is less than 30 W.

Once the solution based on the use of 915 nm diodes has been identified and verified, the 1.135 micron laser cavity can be optimized to increase the heating of the fiber and further raise the threshold of parasitic lasing. For this, we have increased the reflectivity of the LR-FBG Bragg grating, which was initially 20%, up to 40%. The LR-FBG grating acts as the output mirror of the 1.135 micron ytterbium laser and its conventional design focuses on maximizing the laser's output power, which leads to using a low reflectivity (20% in our case). This design rule is general and the optimal reflectivity that achieves the maximum emission, for a fixed diode pumping, is normally less than 20% [Valle-Hernández 2011]. However, in our case, doing the opposite of what would seem most advisable, that is, increasing the reflectivity of the LR-FBG grating increases the internal heating of the fiber, since we increase the density of photons in the laser cavity and with it the conversion of 915 nm photons to 1.135 micron photons due to the stimulated emission. It is true that the increase in reflectivity reduces the efficiency of the ytterbium laser, but it helps us solve the problem of parasitic lasing. If we have enough power in the pumping diodes to reach the power of 2 microns that we have set, the improvement obtained with the increase in reflectivity compensates for the loss of some efficiency. Figure 3 includes the case of using 915 nm and a 40% LR-FBG grating. In this case we can see that the threshold of parasitic lasing exceeds 50 W for a fiber temperature of 27 °C, while in the case of using an LR-FBG of 20% it was necessary to heat to 35 °C and to 80 °C in the case of using 975 nm. Another example, if we set a working temperature of 25 °C, in the case of 915 nm - 40% the threshold of the parasitic lasing is 47 W, only 35 W in the case of 915 nm - 20% and about 22 W in the case of 975 nm - 20%.

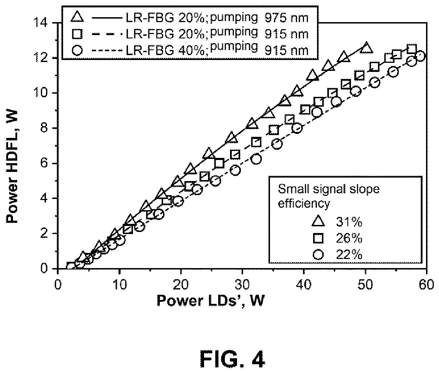

Figure 4 shows the 2 micron power emitted at the laser output as a function of the power of the semiconductor laser diodes, for the case of 975 nm and 915 nm, with the reflectivity values 20 and 40% of the LR-FBG in the latter case. It is observed that the 915 nm pumping is somewhat less efficient than the 975 nm pumping, in agreement with the somewhat lower absorption that the ytterbium fiber presents at that wavelength of 915 nm. For example, if we set ourselves the goal of achieving an emission of 10 W at 2 microns, 40 W of 975 nm pumping and 45 W of 915 nm pumping are needed, when we use a reflectivity of 20%, and 48 W if we use the reflectivity of 40%. However, the technical advantages of 915 nm pumping are greater, since we managed to eliminate or significantly reduce the need to heat the ytterbium fiber and that this small loss of efficiency can be compensated without special difficulty with an increase in pumping power. If we look at the points marked in Figure 3 that correspond to the 10 W emission of 2 microns, we see that in the case of 975 nm - 20% it needs to be heated to 65.9 °C, in the case of 915 nm - 20% a small heating of 30 °C would be needed and in the case of 915 nm - 40% we can work at 25.2 °C, which is practically room temperature and no heating would be needed.

Therefore, it is clear that the invention eliminates or significantly reduces the need to heat the ytterbium fiber whose emission is used to pump the holmium fiber that forms the 2 micron laser. This is an extremely important technical advantage since it simplifies the power and control electronics of the laser and the insulation and cooling needs of the rest of the system with respect to the fiber that would require heating. This simplifies the design of the laser packaging, making it more compact and lightweight. All this also entails a reduction in components in manufacturing and the consequent economic improvements.

In accordance with the foregoing, the present invention is configured to be implemented in processing applications of transparent plastic materials in the visible, biomedicine, laser scalpel, active vision systems, defense, LIDAR and pollution monitoring.

As described above, it will be evident to a person skilled in the art that the embodiments of the pumping system for a high power holmium-doped fiber optic laser of the present invention and its respective components described above are presented for illustrative purposes only, since a person skilled in the art can make numerous variations thereto, as long as they are designed in accordance with the principles of the present invention. Consequently, the present invention includes all the embodiments that a person skilled in the art can propose from the concepts contained in the present description, in accordance with the following claims.

## Claims

1. Pumping system for a high power holmium-doped fiber optic laser, **characterized in that** it comprises:
a coreless fiber and a light absorber configured to eliminate light reflection at the wavelength of a coaxial double-cladding ytterbium fiber (DC-YDF) laser;
high reflection (100%, HR-FBG) and low reflection (20% to 40%, LR-FBG) Bragg gratings at 1.135 microns, which form a ytterbium fiber laser cavity; high power 915 nm semiconductor laser diodes that pump coaxial double-cladding ytterbium fiber (DC-YDF) through a pump coupler; and a high reflection Bragg grating (HR-FBG) at 2.07 microns; and
a 2 micron laser formed of a holmium-doped optical fiber (HDF), wherein the holmium-doped optical fiber and the 2.07 micron high-reflection Bragg grating form a holmium-doped fiber laser cavity defining the final 2 micron emitting stage;
wherein the 915 nm photons of said laser diodes are converted into a 1.13 micron photon, releasing additional energy in the form of heat; and
wherein said additional energy is released directly in the core of the double-cladding ytterbium-doped fiber (DC-YDF) and produces a heating thereof in the core of the fiber itself, reducing the heating of the double-cladding ytterbium fiber (DC-YDF) in high powers or eliminating it for medium-low powers.

2. The pumping system for a fiber optic laser according to claim 1, further **characterized in that** it simplifies the need for insulation and cooling of the rest of the system with respect to the fiber.

3. The pumping system for a fiber optic laser according to claim 1, further **characterized in that** in high powers an additional heating lower than 40 °C can be used, which is simpler from the electronic point of view and easier to compatibilize with the rest of the electronic and optical systems of the 2 micron laser.

4. The pumping system for a fiber optic lasers according to claim 1, further **characterized in that** when 915 nm laser diodes are used without making any other changes, the 50 W level is reached with only 35 °C, and with 38 °C the 58 W can be exceeded.

5. The pumping system for a fiber optic laser according to claim 1, further **characterized in that** the use of 915 nm diodes allows working at room temperature if the required power of the semiconductor diodes is less than 30 W.

6. Use of the pumping system according to any of the preceding claims, for applications in processing of transparent plastic materials in the visible, biomedicine, laser scalpel, active vision systems, defense, LIDAR and pollution monitoring.

7. Holmium-doped high-power fiber optic laser system, **characterized in that** it comprises a pumping system according to any of claims 1-5.
